Europäisches Patentamt

European Patent Office

Office européen des brevets

(19)

(11) **EP 1 087 554 A1**

## (12) DEMANDE DE BREVET EUROPEEN

(43) Date de publication:
**28.03.2001 Bulletin 2001/13**

(51) Int Cl.$^7$: **H04B 10/18**, H04B 10/17

(21) Numéro de dépôt: **00402572.2**

(22) Date de dépôt: **18.09.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **24.09.1999 FR 9911980**

(71) Demandeur: **ALCATEL**
**75008 Paris (FR)**

(72) Inventeur: **Pincemin, Erwan**
**Kernevez 22290 Gommenech'h (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Regenerateur optique pour signaux RZ limitant le bruit dans les "zeros"**

(57) L'invention concerne un régénérateur pour un système de transmission à signaux optiques RZ, comprenant des moyens pour décaler les signaux entre eux en fonction de leur intensité, et un modulateur d'intensité pour moduler les signaux décalés. Le décalage appliqué par les moyens de décalage entre les signaux correspondant à une valeur logique "zéro" et les signaux correspondant à une valeur logique "un" est tel que l'intensité de modulation pour les signaux correspondant à une valeur "zéro" est inférieure à l'intensité de modulation pour les signaux correspondant à une valeur "un". On peut ainsi choisir un décalage de la moitié du temps bit entre les signaux correspondant à une valeur "un" et les signaux correspondant à une valeur "zéro". L'intensité de modulation est alors maximale pour les signaux correspondant à une valeur "un", et minimale pour les signaux correspondant à une valeur "zéro".

L'invention permet de limiter le bruit dans les "zéros" d'un signal RZ, tout en assurant la régénération des "uns".

FIG_3

$T_{bit}$

L

EP 1 087 554 A1

# Description

La présente invention concerne le domaine des transmissions par fibres optiques, et plus particulièrement la régénération optique pour des systèmes de transmission à fibres optiques. Elle s'applique particulièrement à des systèmes de transmission à signaux RZ (retour à zéro), comme par exemple des systèmes de transmission à signaux solitons. On appelle impulsion ou "un" le signal RZ correspondant à la transmission d'une valeur logique élevée. On appelle "zéro" l'absence de signal, qui correspond à la transmission d'une valeur logique basse.

La transmission d'impulsions solitons ou solitons dans la partie d'une fibre optique à dispersion anormale est un phénomène connu. Les solitons sont des signaux impulsionnels de forme $sech^2$. Avec cette forme d'impulsion, la non-linéarité dans la partie correspondante de la fibre compense la dispersion du signal optique. La transmission des solitons est modélisée de façon connue par l'équation de Schrödinger non-linéaire. Ont aussi été proposés des systèmes de transmission à signaux solitons gérés en dispersion (en langue anglaise, "dispersion-managed solitons transmissions"). Dans de tels systèmes, on utilise un motif de dispersion qui se répète périodiquement pendant des milliers de kilomètres : à une fibre de dispersion anormale (dispersion positive) succède une fibre de dispersion normale (dispersion négative) qui vient compenser presque totalement la dispersion anormale accumulée dans le premier type de fibre. Les signaux se propagent donc dans des fibres de forte dispersion locale mais ne voient au final qu'une dispersion moyenne très faible. Un tel schéma de transmission permet une réduction sensible des effets de gigue (à cause de la faible dispersion moyenne), une nette diminution des effets de collisions entre canaux (à cause de la forte dispersion locale), une amélioration du rapport signal à bruit et un accroissement de l'efficacité spectrale du système. Un tel système est par exemple décrit dans un article de N.J. Smith et N.J. Doran, Journal of Lightwave Technology, vol. 15, n° 10 (1997), p. 1808 et s.

Il a été proposé d'utiliser une modulation synchrone des signaux solitons, par un signal d'horloge ou horloge, pour corriger leur gigue temporelle ; une modulation d'intensité est par exemple décrite dans un article de H. Kubota et M. Nakasawa, IEEE Journal of Quantum Electronics, vol. 29 n° 7 (1993), p. 2189 et s. ; un article de N. J. Smith et N. J. Doran, Optical Fiber Technology, 1, p. 218 (1995) propose une modulation de phase.

Un des problèmes rencontrés dans les systèmes de transmission à fibres optiques réside dans la distorsion que subissent les signaux optiques lorsqu'ils sont générés, transmis ou commutés, ou plus généralement à chaque traitement optique dans le système de transmission. La régénération optique par modulation d'intensité vise à résoudre ce problème de distorsion, en appliquant à chaque bit un signal d'intensité maximale au centre de la fenêtre temporelle du bit, et d'intensité faible sur les bords de la fenêtre temporelle.

Toutefois, la modulation d'intensité ne fournit pas une solution entièrement satisfaisante, notamment dans les "zéros" des signaux RZ. Le bruit dans les "zéros" c'est-à-dire le bruit dans les fenêtres temporelles correspondant à un bit à zéros, ou à un bit sans signal, n'est pas complètement supprimé, en particulier pour des systèmes de transmission transocéaniques. Il reste des signaux appelés aussi pics 'fantômes'.

En outre, dans les régénérateurs optiques classiques, la modulation d'intensité accroît les fluctuations d'amplitude, et le bruit d'amplitudes est stabilisé par un filtre étroit après la régénération. La qualité de la stabilisation du bruit d'amplitude est bonne pour un système de transmission à signaux solitons en propagation classique suivant l'équation de Schrödinger. Toutefois, elle pose problème pour une transmission à signaux solitons gérée en dispersion : ce type de transmission est en effet localement nettement moins non-linéaire qu'une transmission à soliton de Schrödinger ce qui a pour conséquence d'atténuer l'efficacité du filtre.

L'invention propose une solution à ce problème de bruit dans les "zéros" de transmission. Elle permet de s'en affranchir en supprimant les pics "fantômes".

L'invention permet aussi de diminuer les fluctuations d'amplitude dans les "uns" des signaux RZ et plus particulièrement de stabiliser efficacement l'amplitude de ceux-ci dans les systèmes de transmission à signaux solitons gérés en dispersion. Cette quasi-suppression du bruit d'amplitude dans les "uns" des signaux RZ s'accompagne de la possibilité de ne pas rajouter derrière l'invention un filtre étroit. Cette opportunité de ne pas associer de filtre au régénérateur est un des atouts de l'invention et ce d'autant plus qu'un tel schéma est valide non seulement dans une transmission classique à signaux solitons de Schrödinger mais aussi dans une propagation à signaux solitons gérés en dispersion.

L'invention propose ainsi une solution permettant de supprimer les "pics fantômes" dans les "zéros" - le bruit localisé dans les "zéros" - et pour stabiliser l'amplitude dans les "uns" de signaux RZ, et notamment de solitons de Schrödinger ou solitons gérés en dispersion, sans nécessairement avoir recours à un filtre.

Plus précisément, l'invention propose un régénérateur pour un système de transmission à signaux optiques RZ, comprenant des moyens pour décaler temporellement les signaux entre eux en fonction de leur intensité, et un modulateur d'intensité pour moduler les signaux décalés, le décalage entre les signaux correspondant à une valeur "zéro" et les signaux correspondant à une valeur "un" étant tel que l'intensité de modulation pour les signaux correspondant à une valeur "zéro" est inférieure à l'intensité de modulation pour les signaux correspondant à une valeur "un".

Dans un mode de réalisation, le décalage entre les signaux correspondant à une valeur "zéro" et les signaux correspondant à une valeur "un" est tel que l'intensité de modulation pour les signaux correspondant à une valeur "zéro" est minimale et que l'intensité de modulation pour les signaux correspondant à une valeur "un" est maximale.

Dans un autre mode de réalisation, le décalage entre les signaux correspondant à une valeur "zéro" et les signaux correspondant à une valeur "un" est tel que l'intensité de modulation pour les signaux correspondant à une valeur "zéro" est inférieure d'au moins 6 dB à l'intensité de modulation pour les signaux correspondant à une valeur "un".

De préférence, le signal de modulation du modulateur est un signal sinusoïdal d'une période égale au temps bit, et le décalage entre les signaux correspondant à une valeur "zéro" et les signaux correspondant à une valeur "un" est égal à la moitié du temps bit.

Dans un autre mode de réalisation, le régénérateur comprend en outre un amplificateur dont la sortie est reliée aux moyens de décalage.

Les moyens de décalage comprennent avantageusement un milieu non-linéaire, et par exemple une fibre optique aux chalcogénides.

Dans un mode de réalisation, le milieu non-linéaire présente un indice de non linéarité $n_2$ égal à

$$n_2 = (T_{bit}/2).(c/L_{NL}).(S_{eff}/I_1)$$

avec $T_{bit}$ le temps bit, c la vitesse de la lumière, $L_{NL}$ et $S_{eff}$ la longueur de la fibre, et $I_1$ l'intensité de consigne d'un signal correspondant à une valeur "un".

Le milieu non-linéaire peut aussi comprendre une cellule optique.

L'invention propose aussi un procédé de régénération pour un système de transmission à signaux optiques RZ, comprenant

- une étape de décalage temporel des signaux entre eux en fonction de leur intensité,
- une étape de modulation en intensité des signaux décalés,

le décalage entre les signaux correspondant à une valeur "zéro" et les signaux correspondant à une valeur "un" étant tel que l'intensité de modulation pour les signaux correspondant à une valeur "zéro" est inférieure à l'intensité de modulation pour les signaux correspondant à une valeur "un".

Avantageusement, l'étape de décalage comprend le décalage des signaux correspondant à une valeur "zéro" par rapport aux signaux correspondant à une valeur "un" de telle sorte que l'intensité de modulation pour les signaux correspondant à une valeur "zéro" est minimale et que l'intensité de modulation pour les signaux correspondant à une valeur "un" est maximale.

L'étape de décalage peut aussi comprendre le décalage des signaux correspondant à une valeur "zéro" par rapport aux signaux correspondant à une valeur "un" de telle sorte que l'intensité de modulation pour les signaux correspondant à une valeur "zéro" est inférieure d'au moins 6 dB à l'intensité de modulation pour les signaux correspondant à une valeur "un".

Dans un mode de réalisation, l'étape de modulation comprend une modulation par un signal sinusoïdal d'une période égale au temps bit, et l'étape de décalage comprend l'application d'un décalage égal à la moitié du temps bit entre les signaux correspondant à une valeur "zéro" et les signaux correspondant à une valeur "un".

De préférence, le comprend en outre une étape d'amplification préalable à l'étape de décalage.

Dans un mode de réalisation, l'étape de décalage consiste à faire traverser aux signaux un milieu non-linéaire, tel qu'un milieu non-linéaire formé d'une fibre optique, par exemple une fibre aux chalcogénides.

Avantageusement, le milieu non-linéaire présente un indice de non linéarité $n_2$ égal à

$$n_2 = (T_{bit}/2).(c/L_{NL}).(S_{eff}/I_1)$$

avec $T_{bit}$ le temps bit, c la vitesse de la lumière, $L_{NL}$ et $S_{eff}$ la longueur de la fibre, et $I_1$ l'intensité d'un signal correspondant à une valeur "un".

L'étape de décalage peut aussi consister à faire traverser aux signaux un milieu non-linéaire formé d'une cellule optique.

D'autres caractéristiques et avantages de l'invention apparaîtront à la lecture de la description qui suit de modes de réalisation de l'invention, donnée à titre d'exemple et en référence aux dessins annexés, qui montrent

- figure 1, une représentation schématique d'un signal RZ ;
- figure 2, une représentation schématique d'un régénérateur selon l'invention;
- figure 3, une représentation schématique d'une modulation d'intensité dans le régénérateur de la figure 2, appliquée au signal de la figure 1 ;
- figure 4, une représentation schématique de trois bits à "un" présentant des variations d'amplitude ;
- figure 5, une représentation schématique d'une modulation d'intensité selon l'invention appliquée au signal de la figure 4 ;
- figure 6, une représentation schématique des résultats de la modulation.

L'invention propose, pour réduire le bruit dans les zéros, de générer un retard entre les signaux RZ, en fonction de leur intensité, avant de leur appliquer une modulation d'intensité. Le retard est appliqué de sorte à ce que l'intensité maximale dans la modulation d'intensité soit appliquée à des impulsions correspondant à des "uns" d'une amplitude moyenne, et que l'intensité minimale soit appliquée à des "zéros". L'invention permet ainsi une réduction sensible du bruit dans les "zéros". En outre, dans la mesure où l'application d'un retard dépend de l'intensité des impulsions, l'invention permet aussi de corriger les variations d'intensité des bits à "un". Pour appliquer un retard aux impulsions en fonction de leur intensité, l'invention propose d'utiliser un milieu fortement non linéaire.

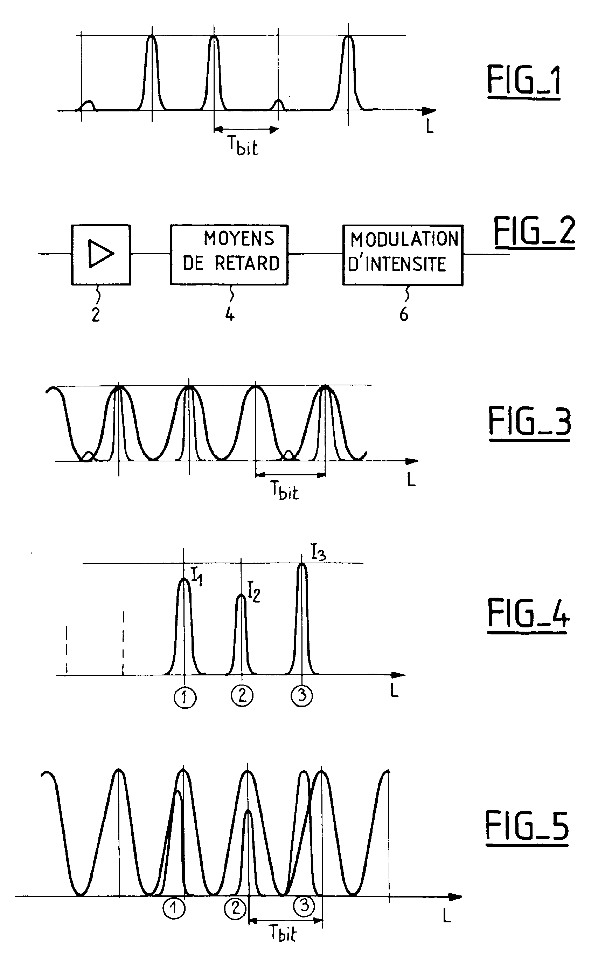

La figure 1 montre une représentation schématique d'un signal RZ ; en abscisse est porté le temps, ou la longueur le long d'un système de transmission ; en ordonnée est porté l'intensité. La figure montre cinq bits, avec des valeurs transmises successivement de 1, 0,1,1 et 0 - de droite à gauche sur la figure. De façon classique pour un signal RZ, les "uns" sont codés par une impulsion avec un pic d'intensité élevée, et les "zéros" sont codés par une absence d'impulsion ; comme le montre la figure, apparaissent néanmoins dans les "zéros" des impulsions avec un pic d'intensité plus faible. Un des objectifs de l'invention, comme exposé plus haut, est de réduire encore l'intensité de ces pics.

La figure 2 montre une représentation schématique d'un régénérateur selon l'invention ; il comprend essentiellement des moyens 4 pour décaler les signaux RZ entre eux, en fonction de leur intensité ; les signaux fournis en sortie des moyens 4 sont transmis à un modulateur d'intensité 6. Dans le mode de réalisation de la figure 1 est en outre prévu en amont des moyens 4 un amplificateur 2. L'amplificateur est un amplificateur d'un type connu en soi ; on peut utiliser pour la modulation d'intensité tout type de modulateur connu en soi, et par exemple ceux décrits dans les articles précités.

Les moyens 4 comprennent avantageusement un milieu fortement non-linéaire, dans lequel, du fait de l'effet Kerr, l'indice de réfraction varie en fonction de l'intensité des signaux transmis, suivant une loi

$$n(I) = n_0 + n_2.I$$

avec $n_0$ l'indice de réfraction linéaire du milieu, et $n_2$ l'indice de réfraction non-linéaire du milieu, et I l'intensité du signal. Une telle loi de variation permet d'obtenir pour des impulsions de forte intensité un indice de réfraction qui est plus élevé que pour des impulsions de faible intensité. Comme la vitesse de propagation dans le milieu non linéaire est inversement proportionnelle à l'indice, les impulsions de faible intensité correspondant à des "zéros" se propagent plus vite que les impulsions d'intensité plus forte, correspondant à des "uns". Un choix approprié du milieu, ainsi que le cas échéant une amplification préalable des signaux grâce à l'amplificateur 2 permettent de déterminer le décalage entre les signaux correspondant à des "zéros" et les signaux correspondant à des "uns", en sortie des moyens 4. Ce décalage correspond avantageusement à la moitié $T_{bit}/2$ du temps bit.

La figure 3 montre une représentation schématique d'une modulation d'intensité dans le régénérateur de la figure 2, appliquée au signal de la figure 1 ; les coordonnées sur les axes sont les mêmes qu'à la figure 1. La figure 2 montre le cas d'un décalage entre les "zéros" et les "uns" de la moitié du temps bit. Est porté en traits gras sur la figure 2 la modulation d'intensité, qui présente dans l'exemple une forme sinusoïdale classique. Comme le montre la figure, les impulsions de forte intensité correspondant à des "uns" sont centrées sur le temps bit, et sont centrées sur les maxima d'intensité du signal de modulation ; en revanche, les impulsions de faible intensité, correspondant à des "zéros" sont centrées sur les minima d'intensité du signal de modulation. Ceci est assuré par la récupération d'horloge du modulateur, qui est verrouillée sur les impulsions de forte intensité, et non pas sur les impulsions de faible intensité. L'invention assure ainsi une modulation d'intensité des impulsions correspondant à des "uns", comme dans les régénérateurs de l'art antérieur ; elle assure aussi une réduction du bruit dans les "zéros" du signal.

On retrouve en sortie du modulateur d'intensité, ou en sortie du régénérateur de l'invention un signal RZ identique en contenu au signal d'entrée, mais dans lequel les "uns" ont été régénérés, et le bruit des "zéros" supprimé ou fortement réduit.

L'invention permet aussi de réduire les fluctuations d'amplitude des impulsions de forte intensité, correspondant à des "uns", comme expliqué maintenant en référence aux figures 4 à 6. La figure 4 montre une représentation schématique de trois bits à "un" présentant des variations d'amplitude ; les trois impulsions représentées à titre d'exemple présentent des intensités $I_1$, $I_2$ et $I_3$ différentes, avec $I_2 < I_1 < I_3$. La valeur d'intensité $I_2$ correspond à la valeur moyenne normale des impulsions, et les deux autres impulsions présentent une intensité trop importante. Lors du passage dans les moyens 4 fortement non-linéaires, les impulsions d'ordre 1 et 3, qui présente une intensité plus forte, se propagent plus lentement, et arrivent avec un certain retard par rapport au centre du temps bit défini au début de la propagation. Autrement dit, le retard de l'impulsion d'ordre 3 par rapport au centre du temps bit initial - c'est-à-dire défini juste avant de rentrer dans le moyen de retard 4 - est plus important que le retard de l'impulsion d'ordre 2 par rapport au centre du temps bit initial, l'intensité $I_3$ de l'impulsion d'ordre 3 étant plus importante que l'intensité $I_2$ de l'impulsion d'ordre 2. L'impulsion d'ordre 1, quant à elle, n'est pas décalée par au centre du temps bit initial. En effet, il faut se représenter le signal comme étant une longue séquence de "uns" et de "zéros". L'intensité des "uns" est aléatoire, dans la mesure où elle est polluée par les fluctuations d'amplitude. Ces fluctuations d'amplitude peuvent être modélisées par une distribution gaussienne caractérisée par une variance et une valeur moyenne. C'est autour des impulsions dont l'intensité est proche de cette valeur moyenne que va s'effectuer la récupération d'horloge. Temporellement, celle-ci va se caler sur ces impulsions dont l'intensité est proche de la valeur moyenne plutôt que sur les impulsions dont l'intensité est éloignée de la valeur moyenne. Comme le montre la figure 5, avec des conventions identiques à celles de la figure 3, l'impulsion d'ordre 2 est centrée sur un maximum du signal de modulation d'intensité; mais les impulsions d'ordre 1 et 3, qui sont en retard par rapport à l'impulsion d'ordre 2, sont décalées par rapport au maximum du signal de modulation, et sont donc écrêtées.

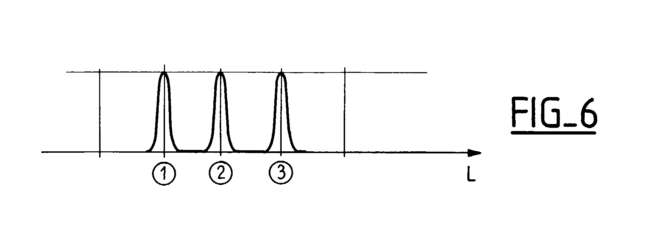

La figure 6 montre une représentation schématique des résultats de la modulation de la figure 5 ; les impulsions d'ordre 1 et 3 ont été écrêtées et recentrées sur le temps bit, et les trois impulsions présentent une intensité égale. L'invention permet de la sorte non seulement de réduire le bruit dans les "zéros", mais encore de réduire les fluctuations d'intensité entre les "uns".

Il apparaît des explications données en référence aux figures 4 à 6 que le régénérateur de l'invention permet de réduire les fluctuations d'intensité entre les impulsions, par écrêtage des impulsions de plus forte intensité. La présence de l'amplificateur 2 dans le régénérateur permet d'assurer une amplification adéquate des signaux, de sorte à ce que les "uns" dont l'intensité est proche de la valeur moyenne de la distribution gaussienne constituée par toutes les intensités des "uns", arrivent centrés sur les maxima de modulation du modulateur d'intensité. L'invention permet donc de diminuer le bruit d'amplitude des signaux sans nécessiter de filtre étroit ; elle est indépendante de la dispersion dans le système, et s'applique donc à tout type de systèmes de transmission optique à signaux RZ, et notamment à des systèmes de transmission à signaux solitons gérés en dispersion.

On détaille dans la suite les différents éléments du modulateur de l'invention. Comme expliqué en référence aux figures précédentes, dans la configuration optimale du régénérateur, le décalage entre les "zéros" et les "uns" en sortie du milieu fortement non-linéaire est égal à la moitié du temps bit ; cette condition dépend bien entendu de la forme du signal de modulation, et correspond à un signal sinusoïdal ou à un signal qui présente une symétrie par rapport à un de ses maxima. . Il est clair que l'invention fonctionne encore si cette condition n'est pas remplie exactement. Des résultats satisfaisants peuvent être obtenus lorsque les zéros du signal arrivent dans les parties du profil temporel de la modulation d'intensité où l'intensité de modulation est minimale, et par exemple est inférieure d'au moins 6 dB à l'intensité de modulation maximale.

Les caractéristiques du milieu fortement non-linéaire utilisé pour assurer le décalage entre les "zéros " et les "uns" peuvent être déterminées comme suit. La différence entre les temps de propagation d'un "zéro" et d'un "un" dans un milieu d'une longueur $L_{NL}$ s'écrit

$$\Delta\tau = L_{NL}/v(I_1) - L_{NL}/v(I_0) \qquad (1)$$

avec $v(I_1)$ et $v(I_0)$ les vitesses respectives des "uns" et des "zéros" dans le milieu non-linéaire.
Ces vitesses sont inversement proportionnelles à l'indice du milieu, qui peut s'écrire

$$n(I) = n_0 + (n_2/S_{eff}).I \qquad (2)$$

avec les mêmes notations que plus haut, mais en considérant une propagation dans une fibre optique, $S_{eff}$ étant la section efficace de la fibre. En combinant les formules (1 ) et (2), on obtient, avec c la vitesse de la lumière :

$$\Delta\tau = L_{NL}.(n_0 + (n_2/S_{eff}).I_1)/c - L_{NL}.(n_0 + (n_2/S_{eff}).I_0)/c$$

$$\Delta\tau = (L_{NL}/c).(n_2/S_{eff}).(I_1 - I_0)$$

Avec $I_0 \approx 0$, l'intensité des impulsions correspondant à des "zéros" restant faible, on a

$$\Delta\tau = (L_{NL}/c).(n_2/S_{eff}).I_1 \qquad (3)$$

En choisissant un décalage $\Delta\tau$ égal à la moitié $T_{bit}/2$ du temps bit, on obtient pour $n_2$ :

$$n_2 = (T_{bit}/2).(c/L_{NL}).(S_{eff}/I_1) \qquad (4)$$

Cette formule permet de déterminer les caractéristiques du milieu non-linéaires, et notamment son indice de réfraction non-linéaire, sa longueur et sa section efficace.
A titre d'exemple, en prenant un temps bit $T_{bit}$ de 25 ps, une longueur de milieu non-linéaire $L_{NL}$ de 10 km, une section efficace $S_{eff}$ de 50 $\mu m^2$, et une intensité $I_1$ de 100 mW (20dBm), et avec c = 3.10$^8$ m/s, on obtient en appliquant la formule (4)

$$n_2 = 1,875.10^{-16} \ m^2/W$$

Ou encore, en prenant un temps bit $T_{bit}$ de 25 ps, une longueur de milieu non-linéaire $L_{NL}$ de 20 km, une section efficace $S_{eff}$ de 20 $\mu m^2$, et une intensité $I_1$ de 1000 mW, one obtient en appliquant la formule (4)

$$n_2 = 3,75.10^{-18} \ m^2/W$$

Une telle puissance de 1000 mW (30dBm) peut être obtenue en sortie d'un amplificateur optique classique, et par exemple en sortie d'un amplificateur à fibre dopée à l'erbium (EDFA).

Ces valeurs sont à comparer à des valeurs classiques de l'indice de non-linéarité pour des fibres classiques, qui sont de l'ordre de $2,5.10^{-20}$ m²/W. Elles peuvent être obtenues à l'aide de nouveau matériaux non linéaires, et par exemple grâce à des chalcogénides ($As_2S_3$). Ces matériaux permettent d'atteindre des valeurs d'indice de non-linéarité de l'ordre de $5.10^{-18}$ m²/W, qui peuvent convenir, comme le montre l'exemple de calcul donné ci-dessus.

On peut aussi utiliser un milieu non-linéaire qui n'est pas sous la forme de fibres optiques, et par exemple une cellule optique contenant un milieu fortement non linéaire. Ce mode de réalisation permet d'utiliser un matériau présentant un fort indice de non linéarité, et de réduire la longueur de propagation. On pourrait par exemple utiliser comme matériau non linéaire du $CS_2$.

Bien entendu, la présente invention n'est pas limitée aux exemples et modes de réalisation décrits et représentés, mais elle est susceptible de nombreuses variantes accessibles à l'homme de l'art. Il est notamment possible de faire varier la valeur du décalage temporel, par rapport aux valeurs données à titre d'exemple. Le choix d'une valeur de décalage temporel dépend de la forme de la modulation, et de l'affaiblissement souhaité des "zéros" par rapport aux "uns".

## Revendications

**1.** Un régénérateur pour un système de transmission à signaux optiques RZ, comprenant des moyens (4) pour décaler temporellement les signaux entre eux en fonction de leur intensité, et un modulateur d'intensité (6) pour moduler les signaux décalés, le décalage entre les signaux correspondant à une valeur "zéro" et les signaux correspondant à une valeur "un" étant tel que l'intensité de modulation pour les signaux correspondant à une valeur "zéro" est inférieure à l'intensité de modulation pour les signaux correspondant à une valeur "un".

**2.** Le régénérateur selon la revendication 1, caractérisé en ce que le décalage entre les signaux correspondant à une valeur "zéro" et les signaux correspondant à une valeur "un" est tel que l'intensité de modulation pour les signaux correspondant à une valeur "zéro" est minimale et que l'intensité de modulation pour les signaux correspondant à une valeur "un" est maximale.

**3.** Le régénérateur selon la revendication 1 ou 2, caractérisé en ce que le décalage entre les signaux correspondant à une valeur "zéro" et les signaux correspondant à une valeur "un" est tel que l'intensité de modulation pour les signaux correspondant à une valeur "zéro" est inférieure d'au moins 6 dB à l'intensité de modulation pour les signaux correspondant à une valeur "un".

**4.** Le régénérateur selon la revendication 1, 2 ou 3, caractérisé en ce que le signal de modulation du modulateur est un signal sinusoïdal d'une période égale au temps bit, et en ce que le décalage entre les signaux correspondant à une valeur "zéro" et les signaux correspondant à une voleur "un" est égal à la moitié du temps bit.

**5.** Le régénérateur selon l'une des revendications 1 à 4, caractérisé en ce qu'il comprend en outre un amplificateur (2), dont la sortie est reliée aux moyens de décalage.

**6.** Le régénérateur selon l'une des revendications 1 à 5, caractérisé en ce que les moyens de décalage comprennent un milieu non-linéaire.

**7.** Le régénérateur selon la revendication 6, caractérisé en ce que le milieu non-linéaire comprend une fibre optique, par exemple une fibre aux chalcogénides.

**8.** Le régénérateur selon la revendication 7, caractérisé en ce que le milieu non-linéaire présente un indice de non linéarité $n_2$ égal à

$$n_2 = (T_{bit}/2).(c/L_{NL}).(S_{eff}/I_1)$$

avec $T_{bit}$ le temps bit, c la vitesse de la lumière, $L_{NL}$ et $S_{eff}$ la longueur de la fibre, et I, l'intensité de consigne d'un signal correspondant à une valeur "un".

**9.** Le régénérateur selon la revendication 6, caractérisé en ce que le milieu non-linéaire comprend une cellule optique.

**10.** Un procédé de régénération pour un système de transmission à signaux optiques RZ, comprenant

- une étape de décalage temporel des signaux entre eux en fonction de leur intensité,
- une étape de modulation en intensité des signaux décalés,

le décalage entre les signaux correspondant à une valeur "zéro" et les signaux correspondant à une valeur "un" étant tel que l'intensité de modulation pour les signaux correspondant à une valeur "zéro" est inférieure à l'intensité de modulation pour les signaux correspondant à une valeur "un".

**11.** Le procédé selon la revendication 10, caractérisé en ce que l'étape de décalage comprend le décalage des signaux correspondant à une valeur "zéro" par rapport aux signaux correspondant à une valeur "un" de telle sorte que l'intensité de modulation pour les signaux correspondant à une valeur "zéro" est minimale et que l'intensité de modulation pour les signaux correspondant à une valeur "un" est maximale.

**12.** Le procédé selon la revendication 10 ou 1 1, caractérisé en ce que l'étape de décalage comprend le décalage des signaux correspondant à une valeur "zéro" par rapport aux signaux correspondant à une valeur "un" de telle sorte que l'intensité de modulation pour les signaux correspondant à une valeur "zéro" est inférieure d'au moins 6 dB à l'intensité de modulation pour les signaux correspondant à une valeur "un".

**13.** Le procédé selon la revendication 10, 1 1 ou 12, caractérisé en ce que l'étape de modulation comprend une modulation par un signal sinusoïdal d'une période égale au temps bit, et en ce que l'étape de décalage comprend l'application d'un décalage égal à la moitié du temps bit entre les signaux correspondant à une valeur "zéro" et les signaux correspondant à une valeur "un".

**14.** Le procédé selon l'une des revendications 10 à 13, caractérisé en ce qu'il comprend en outre une étape d'amplification préalable à l'étape de décalage.

**15.** Le procédé selon l'une des revendications 10 à 14, caractérisé en ce que l'étape de décalage consiste à faire traverser aux signaux un milieu non-linéaire.

**16.** Le procédé selon la revendication 15, caractérisé en ce que l'étape de décalage consiste à faire traverser aux signaux un milieu non-linéaire formé d'une fibre optique, par exemple une fibre aux chalcogénides.

**17.** Le procédé selon la revendication 16, caractérisé en ce que le milieu non-linéaire présente un indice de non linéarité $n_2$ égal à

$$n_2 = (T_{bit}/2).(c/L_{NL}).(S_{eff}/I_1)$$

avec $T_{bit}$ le temps bit, c la vitesse de la lumière, $L_{NL}$ et $S_{eff}$ la longueur de la fibre, et $I_1$ l'intensité de consigne d'un signal correspondant à une valeur "un".

**18.** Le procédé selon la revendication 15, caractérisé en ce que l'étape de décalage consiste à faire traverser aux signaux un milieu non-linéaire formé d'une cellule optique.

FIG_1

FIG_2

FIG_3

FIG_4

FIG_5

FIG_6

Office européen des brevets

**RAPPORT DE RECHERCHE EUROPEENNE**

Numéro de la demande

EP 00 40 2572

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 299 232 A (NIPPON ELECTRIC CO) 25 septembre 1996 (1996-09-25) * page 12, ligne 22 – page 13, ligne 15; figure 5 * --- | 1,10 | H04B10/18 H04B10/17 |
| A | BIGO S ET AL: "DUAL-CONTROL NONLINEAR-OPTICAL LOOP MIRRORS FOR ALL-OPTICAL SOLITON SYNCHRONOUS MODULATION" OPTICS LETTERS,US,OPTICAL SOCIETY OF AMERICA, WASHINGTON, vol. 21, no. 18, 15 septembre 1996 (1996-09-15), pages 1463-1465, XP000630829 ISSN: 0146-9592 * page 1463, colonne de gauche, ligne 39 – colonne de droite, ligne 4; figure 1 * --- | 1,10 | |
| A | LECLERC O ET AL: "2 X 20 GBIT/S, 3500 KM REGENERATED WDM SOLITON TRANSMISSION WITH ALL-OPTICAL KERR FIBRE MODULATION" ELECTRONICS LETTERS,GB,IEE STEVENAGE, vol. 34, no. 2, 22 janvier 1998 (1998-01-22), pages 199-201, XP000773678 ISSN: 0013-5194 * page 199, colonne de droite, ligne 1 – page 200, colonne de gauche, ligne 2; figures 1,2 * ----- | 1,10 | **DOMAINES TECHNIQUES RECHERCHES (Int.Cl.7)** H04B |

Le présent rapport a été établi pour toutes les revendications

| Lieu de la recherche | Date d'achèvement de la recherche | Examinateur |
|---|---|---|
| LA HAYE | 13 novembre 2000 | Cochet, B |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2572

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2000

| Document brevet cité au rapport de recherche | Date de publication | Membre(s) de la famille de brevet(s) | Date de publication |
|---|---|---|---|
| GB 2299232 A | 25-09-1996 | JP 2658956 B<br>JP 8265253 A<br>US 5764396 A | 30-09-1997<br>11-10-1996<br>09-06-1998 |

EPO FORM P0460

Pour tout renseignement concernant cette annexe : voir Journal Officiel de l'Office européen des brevets, No.12/82